# EUROPÄISCHE PATENTANMELDUNG

(11) **EP 0 891 698 A2**
(43) Veröffentlichungstag der Anmeldung: **20.01.1999**
(21) Anmeldenummer: 98890201.1
(22) Anmeldetag: 10.07.1998
(51) Int. Cl.: A01F 15/07

(54) **Rundballennetz**

(30) Priorität: 17.07.1997 AT 1217/97
(71) Anmelder: Teufelberger Gesellschaft m.b.H., A-4600 Wels (AT)
(72) Erfinder: Gahleitner, Thomas, 4600 Wels (AT); Salmhofer, Karl, 4651 Stadl-Paura (AT)
(74) Vertreter: Alge, Daniel, Mag. Dr. rer.nat.

(57) **Zusammenfassung**

Beschrieben wird ein Rundballennetz (1, 1', 1") aus einem aus verstreckten Kunststoff-Folienbändchen hergestellten Gewirk, vorzugsweise Raschelgewirk, mit in Längsrichtung des Netzes (1") verlaufenden Kettenfäden (3a, 3b) und mit zickzackförmig zwischen benachbarten Kettenfäden (3a, 3b) verlaufenden Schußfäden (2a, 2b). Zur Erhöhung der Festigkeit und Formstabilität ist vorgesehen, daß die Folienbändchen (5) aus Polypropylen (PP) bestehen.

## Beschreibung

Die Erfindung betrifft ein Rundballennetz zum Zusammenhalten von Ballen aus Gras, Heu, Stroh oder dergl. Materialien, mit einem aus verstreckten Kunststoff-Folienbändchen hergestellten Gewirk, z.B. einem Raschelgewirk, wobei das Gwirk in Längsrichtung des Netzes verlaufende Kettenfäden und zickzackförmig zwischen benachbarten Kettenfäden verlaufende Schußfäden aufweist.

Weiters bezieht sich die Erfindung auf ein Verfahren zur Herstellung eines solchen Rundballennetzes.

Derartige Rundballennetze, vgl. DE 83 11 900.0 U oder US 4 569 439 A, wurden entwickelt, um in der Landwirtschaft Ballen aus Heu, Stroh etc. zu umwickeln und zusammenzuhalten und so die nachteilige Ballenfixierung mittels Bindegarnen, die sich tief in die Ballen eingraben, zu vermeiden. Als Material für die Folienbändchen wurde dabei insbesondere dehnbares Niederdruck-Polyethylen (d.h. Polyethylen hoher Dichte - HDPE) vorgeschlagen, das im Vergleich zu Hochdruck-Polyethylen (LDPE - Polyethylen niedriger Dichte) eine größere Zugfestigkeit aufweist. Zur Herstellung derartiger Rundballennetze wird eine HDPE-Folienbahn zu Folienbändchen geschnitten, die anschließend verstreckt und einer Wirkmaschine, insbesondere einer Raschelmaschine, zugeführt werden. In der Raschelmaschine wird ein Teil der Folienbändchen zu tragenden Kettenfäden ("Fransenstäbchen") verknüpft, und die übrigen Folienbändchen bilden zickzackförmig verlaufende Schußfäden, welche in die Kettenfäden eingebunden werden. Dabei können nur niedrig verstreckte HDPE-Folienbändchen verwendet werden, da für den störungsfreien Ablauf des Knüpfvorganges in der Raschelmaschine eine hohe Dehnung sowie eine Geschmeidigkeit der Folienbändchen erforderlich ist. Der somit notwendige Einsatz hochwertiger HDPE-Ausgangsprodukte und die daraus erzeugten niedrig verstreckten Folienbändchen erbrachten allerdings nur eine relativ niedrige Festigkeit der Folienbändchen, beispielsweise in der Größenordnung von 3,5 g/den.

Es ist somit Ziel der Erfindung, ein Rundballennetz der eingangs genannten Art zu schaffen, welches den Einsatz eines preiswerten Kunststoffmaterials höherer Festigkeit bei gleichzeitiger Verringerung des Materialeinsatzes vorsieht. Eine weitere Aufgabe der Erfindung besteht in der Schaffung eines Verfahrens, welches eine einwandfreie Verarbeitung des Ausgangsmaterials zum fertigen Rundballennetz sowie eine zusätzliche Verbesserung der Festigkeits- und Steifigkeitseigenschaften des fertigen Netzes ermöglicht.

Das erfindungsgemäße Rundballennetz der eingangs angegebenen Art ist dadurch gekennzeichnet, daß die Folienbändchen aus Polypropylen bestehen. Polypropylen (PP) hat im Vergleich zu LDPE und HDPE eine höhere Festigkeit, so daß sich - bei gleicher absoluter Festigkeit des Netzes - auch der Materialeinsatz verringern läßt. Versuche haben gezeigt, daß bei Verwenden von vorgestreckten Polypropylen-Folienbändchen eine Materialeinsparung von 30% und mehr, verglichen mit den herkömmlichen PE-Rundballennetzen, erzielbar ist, wobei zumindest vergleichbare oder höhere Festigkeiten erreicht werden. Von Vorteil ist auch, daß die PP-Folienbändchen steifer sind als die PE-Folienbändchen, was auch zu einer verbesserten Formfestigkeit oder Stabilität der Netze führt.

Im Hinblick auf eine weitere Verbesserung der Festigkeitseigenschaften des Netzstreifens ist es von besonderem Vorteil, wenn die Breite der PP-Folienbändchen nicht in der Größenordnung der Dicke - wie bei den PE-Bändchen bisher - liegt, sondern um eine Größenordnung oder um zwei Größenordnungen größer als die Dicke ist (also um eine oder zwei Zehnerpotenzen größer ist), und insbesondere ist es hier erfindungsgemäß günstig, wenn das Verhältnis der Breite zur Dicke der Polypropylen-Folienbändchen im verstreckten Zustand 150:1 bis 250:1, vorzugsweise 200:1 beträgt. Derartige glatte breite PP-Bändchen haben, wie Untersuchungen gezeigt haben, eine Restfestigkeit in der Schlinge von über 90%, d.h. es tritt - im Gegensatz zu anderen Bändchen - kaum ein Festigkeitsverlust der Bändchen im zum Gewirk verarbeiteten Bändchen ein, so daß die Festigkeitsvorteile von PP im fertig geraschelten Netz bei solchen "breiten" Bändchen besonders zum Tragen kommen.

Es hat sich auch als vorteilhaft erwiesen, wenn die Folienbändchen im verstreckten Zustand eine Breite von mindestens 3,5 mm, vorzugsweise ca. 4 mm, und eine Dicke von ca. 20 µm aufweisen. Diese Dimensionierung hat sich in der Praxis im Hinblick auf eine hohe Restfestigkeit in der Schlinge besonders bewährt.

Aufgrund der hohen Festigkeit der Polypropylen-Folienbändchen und auch wegen der geringen Reibung dieser Bändchen in den Schlingen kann es beim Abschneiden von Abschnitten von Rundballennetzen in Rundballenpressen, um den jeweiligen Heu- oder Strohballen oder dergl. zu fixieren, zu Schwierigkeiten bzw. nicht ganz vollständigen Schnitten kommen, die aber dann zufriedenstellend überwunden werden, wenn Polypropylen-Folienbändchen der Kettenfäden und der Schußfäden in den Schlingenbereichen miteinander thermisch versiegelt sind. Bei einer derartigen Ausbildung werden die Schlingen aus den steifen Polypropylen-Bändchen in der erforderlichen Form fixiert, und andererseits werden auch die Polypropylen-Bändchen gegenseitig partiell aneinander thermisch gebunden; daraus ergibt sich ein steifes, formstabiles Netzgebilde, das sich nicht nur problemlos durchschneiden läßt, sondern auch einfach dadurch in Querrichtung abtrennen läßt, daß das Netz abgeklemmt bzw. teilweise angeschnitten wird, wobei dann die restlichen Fransenstäbchen auf Grund der angelegten Zugspannung weitestgehend senkrecht zur Laufrichtung bzw. Netzrichtung reißen. Die thermische Versiegelung bzw. Stabilisierung führt auch dazu, daß die Steifigkeit und Stabilität des Netzes in Querrichtung beträchtlich erhöht wird, so daß auch die Abdeckung der vollen Ballenbreite im Vergleich zu Polyethylen-Netzen wesentlich verbessert wird, was ein großer anwendungstechnischer Vorteil gegenüber herkömmlichen Rundballennetzen ist.

Üblicherweise werden Rundballennetze - bisher aus Polyethylenbändchen - mit zwei Schlingen (Maschen) pro Schuß hergestellt, um die erforderliche Stabilität des Netzes zu erreichen; wenn mit einer Schlinge pro Schuß, also mit einer doppelten Maschenlänge, gearbeitet wird, kann auf der Raschelvorrichtung der Ausstoß erhöht (verdoppelt) werden, jedoch geht diese Ausstoßerhöhung zu Lasten der Produktqualität; um hier eine Kompensation vorzusehen, muß wiederum der Materialeinsatz erhöht werden. Beim erfindungsgemäßen Rundballennetz kann, wie sich gezeigt hat, auch im Falle von nur einer Schlinge pro Schuß trotz des im Vergleich zu den herkömmlichen Netzen geringeren Materialeinsatzes (beispielsweise 8 g/m im Vergleich zu 12 g/m oder 14 g/m) eine bessere Festigkeit und Stabilität erreicht werden, und dies insbesondere dann, wenn die Polypropylen-Bändchen wie vorstehend angeführt thermisch fixiert werden. Demgemäß ist es beim erfindungsgemäßen Rundballennetz auf Grund des für die Folienbändchen eingesetzten Polypropylen-Materials in vorteilhafter Weise möglich, daß jeder von einem Kettenfaden zum benachbarten verlaufenden Schußfaden-Länge nur eine Kettenfaden-Schlinge zugeordnet ist. Hierbei wird wie erwähnt die Produktionsgeschwindigkeit erhöht.

Um die leistungsbestimmende Maschenlänge im Gewirk vergleichsweise besonders groß gestalten zu können, ohne die Produktqualität (Festigkeit, Stabilität) zu beeinträchtigen, kann beim erfindungsgemäßen Rundballennetz auch statt nur eines zickzackförmig laufenden Schußfadens eine Struktur vorgesehen werden, bei der jeweils zwei gegensinnig zickzackförmig verlaufende, somit einander kreuzende Schußfäden zwischen benachbarten Kettenfäden vorliegen.

Das erfindungsgemäß zu verwendende Polypropylen-Material für die Folienbändchen ermöglicht in vorteilhafter Weise eine direkte Siegelung der Folienbändchen aneinander, und demgemäß ist ein besonders vorteilhaftes Verfahren zur Herstellung eines Rundballennetzes wie vorstehend angegeben dadurch gekennzeichnet, daß die verstreckten Folienbändchen nach der Herstellung des Gewirkes einer Wärmebehandlung zur direkten thermischen Versiegelung der Folienbändchen an den Kreuzungspunkten unterzogen werden. Hierbei kann eine besonders einfache Vorgangsweise erzielt werden, wenn das Gewirk über eine bombierte Heizplatte, eine Heizwalze oder dergl. Heizeinrichtung, z.B. mit einer Geschwindigkeit von 25 m/min, gezogen wird, wobei die Temperatur der Heizplatte z.B. 160-170°C beträgt.

Es hat sich auch als vorteilhaft erwiesen, wenn die verstreckten Polypropylen-Folienbändchen vor der Herstellung des Gewirkes mit einem Auftrag von Öl, z.B. Weißöl, versehen werden.

Durch den Auftrag von Weißöl wird die Geschmeidigkeit der PP-Folienbändchen erhöht, was für die Produktionssicherheit bei der Herstellung des Netzes in einer Raschelmaschine von Vorteil ist. Durch die an die Gewirk-Herstellung anschließende Wärmebehandlung wird die Stabilität des fertigen Netzes zusätzlich erhöht, während gleichzeitig auch eine Erhöhung der Biegesteifigkeit erfolgt.

Es sei erwähnt, daß es an sich, etwa aus der DE 23 59 212 A, bekannt ist, Fäden aus thermoplastischem Material an ihren Kreuzungspunkten miteinander thermisch zu verschweißen, jedoch handelt es sich hierbei um textile Flächengebilde, bei denen die Fäden insbesondere gitterförmig oder in einer Webstruktur vorliegen.

Die Erfindung wird nachfolgend anhand von bevorzugten Ausführungsbeispielen, auf welche sie jedoch nicht beschränkt sein soll, noch weiter erläutert. In der Zeichnung zeigen:

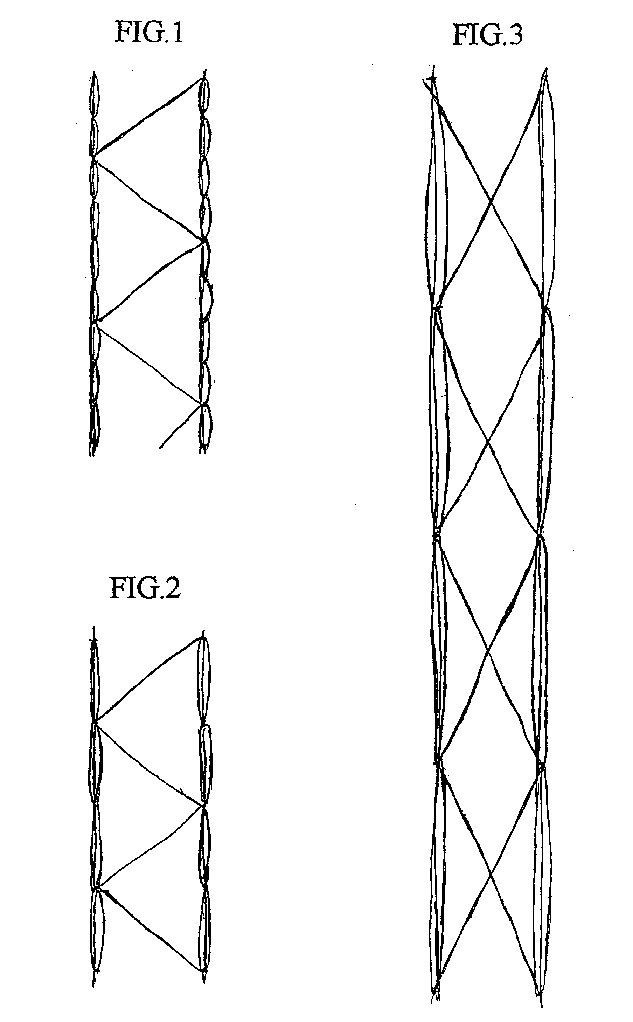

Fig.1, 2 und 3 jeweils einen Ausschnitt von Netzstreifen in schematischer Darstellung.

Bei dem in Fig.1 dargestellten Ausschnitt eines Rundballennetzes bzw. Netzstreifens 1 aus Folienbändchen-Gewirk verläuft ein Schußfaden 2, der aus zumindest einem Folienbändchen 5 besteht, zickzackförmig zwischen zwei benachbarten Kettenfäden 3a, 3b, die ebenfalls aus Folienbändchen 5 bestehen, wobei der Schußfaden 2 bei den Schlingen bzw. Maschen 4 der Kettenfäden 3a, 3b in einer solchen - an sich bekannten - Weise eingebunden ist, daß zwei Schlingen 4 pro Schußfaden 2 vorgesehen sind, um eine adäquate Stabilität des Netzstreifens 1 herzustellen.

Bei dem in Fig.2 ausschnittweise dargestellten Netzstreifen 1' mit zu einem Raschelgewirk verarbeiteten Folienbändchen 5 ist nur eine Schlinge 4 pro Schußfaden-Länge 2 zwischen den benachbarten Kettenfäden 3a, 3b vorgesehen. Diese Maßnahme geht zu Lasten der Produktionsqualität und muß normalerweise durch erhöhten Materialeinsatz an Folienbändchen-Material kompensiert werden. Andererseits wird aber der Ausstoß der Wirkmaschine bei der Herstellung, d.h. die Produktionsgeschwindigkeit, entsprechend erhöht.

Der in Fig.3 dargestellte Netzstreifen 1" besteht ebenfalls aus einem Folienbändchen-Gewirk 5, wobei im gezeigten Beispiel für zwei alternierend zickzackförmig verlaufende Schußfäden 2a, 2b jeweils zumindest ein Folienbändchen 5 vorgesehen ist, während für die Kettenfäden 3a, 3b jeweils zumindest drei Folienbändchen 5 vorgesehen sind. Wie aus Fig.3 weiters ersichtlich ist, weisen die Schlingen bzw. Maschen 4 im Vergleich zu den Ausführungsbeispielen gemäß Fig.1 und 2 eine wesentlich größere, z.B. 5 mal so große, Länge auf, wobei auch bei diesem Ausführungsbeispiel nur eine Schlinge 4 pro Schuß 2a bzw. 2b vorgesehen ist. Daß bei dieser großen Maschenlänge die Produktqualität nicht beeinträchtigt wird, ist auch darauf zurückzuführen, daß wie erwähnt in der Ausführungsform gemäß Fig.3 zwei alternierend zickzackförmig laufende Schußfäden 2a bzw. 2b verwendet werden.

Bei allen Ausführungsbeispielen bestehen die Folienbändchen 5 für das das Rundballennetz ergebende Gewirk, insbesondere Raschelgewirk, aus Polypropylen anstatt wie früher aus Polyethylen, wobei Polypropylen den Vorteil hat, daß es im Vergleich zu Polyethylen fester, steifer und preiswerter ist. Diese Folienbändchen 5 aus Polypropylen haben beispielsweise eine Ausgangsfestigkeit von über 6 g/den, im Vergleich zu bloß 3,5 g/den im Fall von HDPE-Folienbändchen gemäß Stand der Technik. Nach der Verarbeitung, also im Netz, haben HDPE-Bändchen nur noch eine Festigkeit von ca. 3 g/den in der Kette. Auch PP-Bändchen können nach der Verarbeitung unter Umständen eine Restfestigkeit von bloß dieser Größenordnung haben; die Restfestigkeit ist jedoch in der Regel bei PP-Bändchen entsprechend höher, z.B. ca. 4 g/den, insbesondere wenn vergleichsweise breite, glatte PP-Folienbändchen verwendet werden, die beispielsweise eine Breite von mindestens 3,5 mm, vorzugsweise ungefähr 4 mm haben, wogegen die Dicke beispielsweise ungefähr 20µm beträgt. Diese Abmessungen gelten dabei für die Bändchen nach dem Recken. Besonders bemerkbar werden die Festigkeitsvorteile von Polypropylen im fertig gewirkten Rundballennetz dann, wenn die Polypropylenbändchen (im verstreckten Zustand) ein Breite/Dicken-Verhältnis von ca. 200:1 (allgemein 150:1 bis 250:1, insbesondere 180:1 bis 220:1) haben, wobei sich bei derartigen Bandquerschnitten die Festigkeitsverluste in der Schlinge auf ein Minimum reduzieren.

Um dem fertigen PP-Rundballennetz eine hohe Formstabilität und Steifigkeit zu verleihen und dabei ein einfaches Querschneiden beim Verarbeiten in Rundballenpressen zu erzielen, werden zweckmäßigerweise die Folienbändchen 5 aus Polypropylen auch partiell aneinander thermisch gesiegelt, so daß die Schlingen in der gegebenen Form fixiert werden und überdies Kettenfäden und Schußfäden miteinander verbunden werden. Ein derartiges thermisch versiegeltes und fixiertes Rundballennetz läßt sich einfach durch Abklemmen bzw. teilweises Anschneiden und nachfolgendes Reißen in Querrichtung trennen. Weiters wird durch diese thermische Stabilisierung des Netzes ein Gebilde erzielt, daß sich, anders die herkömmlichen Rundballennetze, in Querrichtung praktisch nicht zusammenzieht, so daß auch die Verarbeitung bei der Herstellung der jeweiligen Rundballen begünstigt wird.

Die Herstellung der Netzstreifen 1 bzw. 1' bzw. 1" erfolgt in der Weise, daß zunächst Folienbändchen 5 aus einer PP-Bahn abgeschnitten, anschließend verstreckt und sodann z.B. auf Spulen aufgewickelt werden, die einer Raschelmaschine (nicht dargestellt) als Arbeitsmaterial zugeführt werden. Vorzugsweise beträgt die Breite der verstreckten Folienbändchen 5 etwa 4 mm und deren Dicke etwa 20µm, wobei die Verstreckung in der Weise erfolgt, daß die ursprüngliche Dicke und Breite der Folienbändchen um einen Faktor √6 bis √11 reduziert wird.

Beim Abwickeln der verstreckten Folienbändchen 5 in der Raschelmaschine können diese mit Weißöl (Paraffinöl) bestrichen werden, so daß ihre Geschmeidigkeit für den Wirkvorgang in der Raschelmaschine erhöht wird.

Der fertige Netzstreifen 1 bzw. 1' bzw. 1" wird anschließend einer Wärmebehandlung unterzogen, indem der Netzstreifen über eine z.B. bombierte Heizplatte (nicht dargestellt) mit einer Geschwindigkeit von etwa 25 m/min gezogen wird, wobei die Heizplatte eine Temperatur von etwas unter der Schmelztemperatur von Polypropylen, z.B. von 160 bis 170°C, aufweist. Durch diesen Prozeß kommt es einerseits zu der beschriebenen partiellen thermischen Verschweißung (Versiegelung) an den Kreuzungsstellen der Kettenfäden 3a, 3b mit den Schußfäden 2a, 2b, und andererseits werden die Schlingen 4 selbst fixiert, wobei wie erwähnt die Zugfestigkeit und die Stabilität des Netzstreifens erhöht werden.

Versuche ergaben, daß die angestrebte Festigkeit der Bändchen im Netz von 4 g/den problemlos erreicht wird.

Andererseits kann die - leistungsbestimmende - Maschenlänge, also der Abstand zwischen aufeinanderfolgenden Knoten, vergrößert werden (im Vergleich zu bekannten Rundballennetzen auf das 5-fache), ohne daß die Produktqualität beeinträchtigt wird.

## Patentansprüche

1. Rundballennetz (1; 1'; 1") zum Zusammenhalten von Ballen aus Gras, Heu, Stroh oder dergl. Materialien, mit einem aus verstreckten Kunststoff-Folienbändchen (5) hergestellten Gewirk, z.B. einem Raschelgewirk, wobei das Gewirk in Längsrichtung des Netzes verlaufende Kettenfäden (3a, 3b) und zickzackförmig zwischen benachbarten Kettenfäden (3a, 3b) verlaufende Schußfäden (2; 2a, 2b) aufweist, dadurch gekennzeichnet, daß die Folienbändchen (5) aus Polypropylen bestehen.

2. Rundballennetz nach Anspruch 1, dadurch gekennzeichnet, daß das Verhältnis der Breite zur Dicke der Polypropylen-Folienbändchen (5) im verstreckten Zustand 150:1 bis 250:1, vorzugsweise ca. 200:1, beträgt.

3. Rundballennetz nach Anspruch 1 oder 2, dadurch gekennzeichnet, daß die Polypropylen-Folienbändchen (5) im verstreckten Zustand eine Breite von mindestens 3,5 mm, vorzugsweise ca. 4 mm, und eine Dicke von ca. 20 µm aufweisen.

4. Rundballennetz nach einem der Ansprüche 1 bis 3, dadurch gekennzeichnet, daß Polypropylen-Folienbändchen (5) der Kettenfäden (3a, 3b) und der Schußfäden (2; 2a, 2b) in den Schlingenbereichen miteinander thermisch versiegelt sind.

5. Rundballennetz nach einem der Ansprüche 1 bis 4, dadurch gekennzeichnet, daß jeder von einem Kettenfaden (3a, 3b) zum benachbarten (3b, 3a) verlaufenden Schußfaden-Länge nur eine Kettenfaden-Schlinge (4) zugeordnet ist.

6. Rundballennetz nach einem der Ansprüche 1 bis 5, dadurch gekennzeichnet, daß jeweils zwei gegensinnig zickzackförmig verlaufende, einander kreuzende Schußfäden (2a, 2b) vorgesehen sind.

7. Verfahren zur Herstellung eines Rundballennetzes (1; 1'; 1") nach einem der Ansprüche 4 bis 6, dadurch gekennzeichnet, daß die verstreckten Folienbändchen (5) nach der Herstellung des Gewirkes einer Wärmebehandlung zur direkten thermischen Versiegelung der Folienbändchen (5) an den Kreuzungspunkten unterzogen werden.

8. Verfahren nach Anspruch 7, dadurch gekennzeichnet, daß das Gewirk über eine bombierte Heizplatte, eine Heizwalze oder dergl. Heizeinrichtung gezogen wird.

9. Verfahren nach Anspruch 8, dadurch gekennzeichnet, daß das Gewirk mit einer Geschwindigkeit von 25 m/min über die Heizplatte, Heizwalze oder dergl. Heizeinrichtung, gezogen wird.

10. Verfahren nach Anspruch 8 oder 9, dadurch gekennzeichnet, daß die Temperatur der Heizplatte 160-170°C beträgt.

11. Verfahren nach einem der Ansprüche 7 bis 10, dadurch gekennzeichnet, daß die verstreckten Polypropylen-Folienbändchen (5) vor der Herstellung des Gewirkes mit einem Auftrag von Öl, z.B. Weißöl, versehen werden.
